# EUROPEAN PATENT APPLICATION

(11) **EP 1 516 942 A1**
(43) Date of publication of application: **23.03.2005**
(21) Application number: 04255648.0
(22) Date of filing: 16.09.2004
(51) Int. Cl.: C23C 26/02, B23K 35/02

(54) **Method for coating a substrate**

(30) Priority: 17.09.2003 US 666182
(71) Applicant: GENERAL ELECTRIC COMPANY, Schenectady, NY 12345 (US)
(72) Inventor: Hasz, Wayne Charles, Pownal, Vermont 05261 (US); Budinger, David Edwin, Loveland, Ohio 45140 (US); Beverley, Michael, West Chester, Ohio 45069 (US); Patrick, D. Keith, Cincinnati, Ohio 45241 (US); Gray, Dennis Michael, Delanson, New York 12053 (US)
(74) Representative: Pedder, James Cuthbert

(57) **Abstract**

A method for coating a substrate is presented. The method comprises providing a substrate; attaching a preform to the substrate, the preform comprising braze alloy and wear-resistant particles; and bonding the preform to the substrate to form a wear-resistant coating.

## Description

The present invention generally relates to coatings for turbine engine components, particularly, wear coatings for turbine engine components.

Wear coatings, also referred to herein as "wear resistant coatings," have found various applications in turbine engines. For example, certain gas turbine blades, such as certain low pressure turbine blades, are fabricated with integral shroud portions at the outer extremity of the airfoil. The blade shrouds are typically designed with an interlocking feature, usually in the form of a notch, which allows each blade to be interlocked at its shroud with an adjacent neighbor blade when such blades are installed about the circumference of a turbine disk. This interlocking feature assists in preventing the airfoils from vibrating, thereby reducing the stresses imparted on the blades during operation. However, the interlocking interfaces ("interlocks") are susceptible to wear as they rub against each other during service, which causes gaps to open in the shrouds, thereby allowing the airfoils to twist and further deform, and even to possibly vibrate during operation, which can quickly lead to blade breakage. Flame spray, welding, and other processes have been developed to apply wear resistant coatings to the contacting surfaces of the interlock interface between adjacent blades. In other applications, wear-resistant coatings are deposited on the outer tips of turbine blades. Such coatings are generally employed to decrease the rate of wear of the blade due to contact of the blade with its surrounding shroud. Other wear coatings are placed on leading edges of turbine blades to decrease wear (by erosion) due to contact with environmental particulates (e.g., dirt, sand) that enter the turbine engine during operation.

Still another type of wear coating is placed on parts of the turbine engine that are susceptible to wear due to part-to-part contact during operation. For example, in the high pressure turbine (HPT) and low pressure turbine (LPT) sections of an engine, wear coatings are placed on nozzle wear pads that rub against an adjacent structure, such as a shroud hanger or a pressure balance seal.

Certain types of wear coatings, such as those applied to LPT blade shroud interlocks, are applied by welding processes. These processes result in low production yields due to cracking of the substrate, dilution of the substrate material by the incorporation of weld filler material, and other associated problems. Alternatively, the coating is applied to components by a thermal spray process, such as plasma spraying. Several disadvantages exist with thermal spray processing. For example, the part to be treated must be masked in order to prevent application of the wear coating on portions of the component that are not subject to part-to-part wear. In addition, some regions of a part are difficult to access with thermal spray equipment. Also, the coating application requires time consuming processing, and lacks good dimensional control in certain cases.

Accordingly, a need exists in the art for improved techniques for depositing wear coatings. In addition, a need exists in the art for wear coatings that are resistant to spallation and which have requisite wear resistance.

Embodiments of the present invention include methods for coating a substrate, such as a turbine engine component. In one method a preform comprising braze alloy and wear-resistant particles is attached to the substrate. The preform is then bonded to the substrate to form the wear-resistant coating.

The invention will now be described in greater detail, by way of example, with reference to the drawings, in which:-
Figure 1 illustrates a partial cross-section of components of a turbine engine; and
Figure 2 illustrates a tip shroud an neighboring tip shrouds as seen looking along the long axis of a turbine blade.

According to an embodiment of the present invention, a substrate, such as in the form of a turbine engine component, is treated to improve its erosion resistance at elevated operating temperatures, such as temperatures above 1200° F. The substrate is typically formed of a high-temperature alloy, including superalloy materials, known for high temperature performance in terms of tensile strength, creep resistance, oxidation resistance, and corrosion resistance, for example. Other high-temperature alloys may also be treated according to embodiments of the present invention, such as ferritic based alloys used in lower temperature environments, including hydroelectric turbine components and the low-pressure stage of a turbine engine.

In the case of a superalloy material, the superalloy is typically formed of a nickel-base or a cobalt-base alloy, wherein nickel or cobalt, respectively, is the single greatest element in the superalloy by weight. Illustrative nickel-base superalloys include at least about 40 wt% Ni, and at least one component from the group consisting of cobalt, chromium, aluminum, tungsten, molybdenum, titanium, and iron. Examples of nickel-base superalloys are designated by the trade names Inconel®, Nimonic®, Rene® (e.g., Rene®80-, Rene®95, Rene®142, and Rene®N5 alloys), and Udimet®, and include directionally solidified and single crystal superalloys. Illustrative cobalt-base superalloys include at least about 30 wt% Co, and at least one component from the group consisting of nickel, chromium, aluminum, tungsten, molybdenum, titanium, and iron. Examples of cobalt-base superalloys are designated by the trade names Haynes®, Nozzaloy®, Stellite® and Ultimet®. Typically the substrate comprises a component of a turbine assembly, such as a gas turbine assembly or a hydroelectric turbine assembly. Exemplary components include, but are not limited to a turbine nozzle, turbine blade, shroud, shroud hanger, pressure balance seal, or combustor component. Such turbine components are generally subject to part-to-part wear due to abutting contact with each other or with other components of the turbine engine.

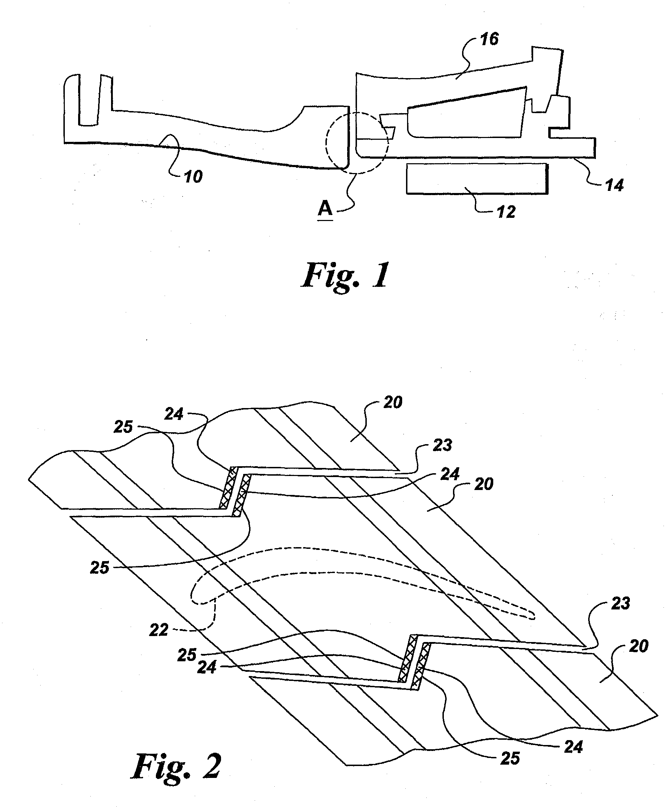

In some embodiments of the present invention, the substrate comprises a component of a turbine assembly, such as, for example, a gas turbine assembly or a hydroelectric turbine assembly. Figure 1 illustrates in partial cross-section components of a turbine engine that are treated with a wear coating according to an aspect of the present invention. It is noted that the operating principles and general structure of turbine engines are well known in the art and are not repeated herein. As illustrated, the partial cross-section of the turbine engine includes a nozzle 10 for directing fluid flow into the engine to drive blade 12. While the drawing depicts a single blade, the engine typically has a plurality of blades mounted on a rotational shaft. The blades 12 rotate within an area defined by the shroud 14, which is supported by shroud hanger 16. The portion of blade 12 adjacent to shroud 14 is known in the art as the blade tip, and this tip portion is prone to wear due to intermittent contact with shroud 14 during operation. Generally the shroud 14 and the shroud hanger 16 are in interlocking engagement such that the shroud is fully supported.

Area A represents a particular region for application of a wear coating according to an aspect of the present invention. The wear coating prevents unwanted wear due to abutting contact and relative movement between the nozzle 10, shroud 14 and shroud hanger 16. The wear coating, in accordance with some embodiments, can be applied on any one of or any combination of nozzle 10, shroud 14, and shroud hanger 16.

Figure 2 depicts a particular embodiment of the present invention in which the substrate provided is a blade 12 (Figure 1), such as, for example, a low pressure turbine blade, that includes an integral tip shroud 20 at the outer extremity of the blade airfoil 22. Each tip shroud 20 has two correspondingly opposite Z-shaped interlock notches 23, which allow tip shroud 20 to interlock with its neighboring tip shrouds 20. Wear coating 24 is applied to at least a portion of tip shroud 20, often on the interlock notch 23, to avoid excessive wear along interlock notch 23. In particular embodiments the wear coating is applied to a contact surface 25 of the interlock notch 23.

According to an embodiment of the present invention, the wear-resistant coating includes a first phase formed of wear-resistant material, and a second, matrix phase formed of braze alloy that in certain embodiments bonds the wear-resistant material to the substrate. According to a particular embodiment of the present invention, the wear-resistant material is in particulate form and comprises a material from a group consisting of chrome carbide and cobalt alloys. The particular details of the wear-resistant coating are described below.

The wear-resistant coating may be formed on the substrate according to various techniques. In one embodiment of the invention, the wear-resistant coating is deposited by placing a brazing sheet on the substrate and fusing the brazing sheet to the substrate. The brazing sheet is generally formed of a single green (unsintered) braze tape, several green tapes, or a braze preform.

The brazing sheet contains a braze alloy that is typically nickel-based or cobalt-based, wherein nickel or cobalt is the single greatest element of the braze alloy by weight. Those skilled in the art will appreciate that a wide variety of braze alloy compositions are available commercially, and that the specific composition of the braze alloy is generally selected based upon the specific requirements of a particular application. Braze alloys typically contain additional elements, such as, for example, chromium (Cr), iron (Fe), tungsten (W), tantalum (Ta), and other elements, to provide enhanced high-temperature properties. Moreover, the braze alloy composition typically contains one or more components for lowering the melting point of the braze alloy for ease of fabrication (lower working temperature) and to ensure that the braze alloy melts in a temperature range lower than that of any underlying material as well as the wear-resistant material. Melting point suppressants for nickel-base and cobalt-base braze alloys include silicon (Si), boron (B), phosphorous (P), or combinations thereof.

In some embodiments, the braze alloy composition comprises up to about 30 weight percent Cr, up to about 10 weight percent Fe, up to about 20 weight percent W, up to about 15 weight percent Si, up to about 5 weight percent B, up to about 15 weight percent P, and the balance comprising at least one of nickel, cobalt, and combinations thereof. Exemplary nickel-base braze alloy compositions include the following. The following components are designated in weight %, and all compositions are approximate:
1. 4.5 Si, 14.5 Cr, 3.3 B, and 4.5 Fe, balance Ni;
2. 15 Cr, 3.5 B, balance Ni;
3. 4.5 Si, 3 B, balance Ni;
4. 4.2 Si, 7 Cr, 3 B, 3 Fe, balance Ni;
5. 10 Si, 19 Cr, balance Ni;
6. 3.5 Si, 22 Co, 2.8 B, balance Ni;
7. 3.5 Si, 1.8 B, balance Ni;
8. 4.5 Si, 14 Cr, 3 B, 4.5 Fe, balance Ni;
9. 17 Cr, 9 Si, 0.1 B, balance Ni;
10. 2.6 Si, 2 Cr, 2 B, 1 Fe, balance Ni;
11. 15 Cr, 8 Si, balance Ni;
12. 7 Cr, 3 Fe, 4 Si, 3 B, and balance Ni.

Exemplary cobalt-base braze alloy compositions include:
1. 8 Si, 19 Cr, 17 Ni, 4 W, 0.8 B, balance Co;
2. 17.0 Ni, 1.0 Fe, 8.0 Si, 19.0 Cr, 0.8 B, 0.4 C, balance Co;
3. 23.5 Cr, 10 Ni, 7 W, 3.5 Ta, 2.9 B, 0.2 Ti, balance Co;
4. 22 Cr, 22 Ni, 14.5 W, 0.35 Si, 2.3 B, balance Co.

In one embodiment, the brazing sheet is a single layer, a green braze tape formed by drying a slurry containing a liquid medium such as water, organic solvent, or a mixture thereof, a braze alloy, wear-resistant material, and a binder. Examples of binders include water-base organic materials such as polyethylene oxide and various acrylics, as well as solvent-base binders. The slurry is typically tape cast onto a removable support sheet, such as a plastic sheet. The slurry is then dried, wherein the liquid medium including any volatile material therein is evaporated. The resulting green braze tape typically has a thickness in a range of about 75 microns to 2500 microns, preferably in a range of about 375 microns to about 1000 microns. Alternatively, the slurry can be cast directly onto the substrate, for producing an in-situ wear-resistant coating.

Alternatively, the brazing sheet is formed from multiple green tapes, generally including a first green tape containing braze alloy, and a second green tape containing wear-resistant material. This particular embodiment is advantageous in that it permits use of commercially available green braze tapes, generally containing as nickel-base or cobalt-base braze alloys, and that it minimizes in-plane shrinkage upon brazing to the substrate. Examples of commercially available green braze tapes include the Amdry line of braze tapes, available from Sulzer Metco.

In another embodiment, the brazing sheet containing braze alloy is in the form of a braze preform, which is similar to the single green braze tape mentioned above, but which contains no binder. The braze preform is generally formed by sintering a green braze tape (described above) to effect binder burn-out and densify the material to form a sintered preform. Alternatively, the braze preform is formed by one of various techniques, including melt spinning or thermal spray. The braze preform typically has a thickness on the order of about 200 microns to about 3000 microns, such as about 600 microns to about 2500 microns. In some embodiments, the preform is formed by creating a green braze tape in a desired shape prior to sintering, for example, by cutting a tape to the shape. In certain alternative embodiments, the preform is cut to the desired shape from a larger, fully sintered preform.

In one embodiment, the wear-resistant material comprises a ceramic wear-resistant powder. In one example, the wear-resistant powder comprises at least one of a carbide and an oxide. Suitable examples of carbides include, but are not limited to, chromium carbide (also referred to herein as "chrome carbide") and tungsten carbide. The chrome carbide is typically a material selected from the group consisting of Cr₂₃C₆, Cr₇C₃, Cr₃C_{2,}, and combinations thereof. The carbide, whether tungsten carbide, chrome carbide, or other, is generally in the form of a pre-alloyed carbide powder, wherein the particles of the powder are homogeneous and uniform throughout their cross sections. Alternatively, the carbide, such as, for example, Cr₃C₂, is blended with another material, such as NiCr which functions as a metallic binder. In the case of tungsten carbide, cobalt metal is often used as the metallic binder.

Suitable examples of oxides include, but are not limited to, aluminum oxide and yttrium oxide.

Other wear-resistant materials are suitable for use in embodiments of the present invention. For example, in particular embodiments the wear-resistant particles comprise diamond. In another embodiment, the particulate material comprises an alloy wear-resistant material. In this case, it is advantageous to utilize an alloy that forms a lubricious oxide film over its surface during actual use, which oxide functions to lubricate the interface between the treated component and adjacent structure at high temperatures (e.g., above 1000°F) to reduce wear. For example, wear is reduced between a nozzle wear pad and an adjacent balance seal in a high pressure turbine due to presence of the oxide forming alloy. One particular group of materials that forms a lubricating or lubricious oxide film includes cobalt alloys. Exemplary cobalt-base lubricious alloys have the following nominal compositions:
(1) 28.5 wt% molybdenum, 17.5 wt% chromium, 3.4 wt% silicon, balance cobalt,
(2) 22.0 wt% nickel, 22 wt% Cr, 14.5 wt% tungsten, 0.35 wt% silicon, 2.3 wt% boron, balance cobalt,
(3) 10 wt% nickel, 20 wt% Cr, 15 wt% tungsten, balance cobalt,
(4) 22 wt% nickel, 22 wt% Cr, 15.5 wt% tungsten, balance cobalt, and
(5) 5 wt% nickel, 28 wt% Cr, 19.5 wt% tungsten, balance cobalt.

The particle size distribution of the wear-resistant particles, irrespective of the composition of the particles, typically lies within a range of about 5 to 200 microns, such as 10 to 45 microns (-325 mesh powder). However, nano-sized wear resistant material, that is, powder having a maximum particle size of less than about 200 nanometers, may show improved wear properties over the same material composition of a larger particle size, and such material is also suitable for use in embodiments of the present invention. The particulate phase 14 generally has a higher melting or softening point than that of the braze alloy such that the particles remain largely intact through the fusing operation. The proportion of wear-resistant particles to braze alloy is generally within a range of about 50 to about 95 wt%.

Following formation of a brazing sheet including a braze alloy component and a wear-resistant particulate phase component, the brazing sheet is attached to the substrate 10 in the area on substrate 10 where the coating is desired to be applied. The brazing sheet is typically attached to the substrate 10 by simple means prior to fusing. For example, in the case of a green braze tape or tapes, an adhesive is typically applied between the brazing sheet and substrate 10. Suitable adhesives completely volatilize during the fusing step. Illustrative examples of adhesives include polyethylene oxide and acrylic materials. A particular commercial example includes "4B Braze Binder" from Cotronics Corp. The adhesive may be applied utilizing one of various techniques including spraying or coating using a liquid adhesive, or applying a mat or film of double-sided adhesive tape.

Alternatively, in the case of a green tape or tapes, the sheet is exposed to a solvent that partially dissolves and plasticizes the binder, causing the tape to conform and adhere to the substrate surface. Examples of solvents include toluene, acetone, or another organic solvent that can be sprayed or brushed onto the green braze tape after placing the tape on the substrate.

In the case of a braze preform, the brazing sheet is typically spot welded to the substrate, such as by resistance welding. Other welding techniques include RF (radio-frequency) welding, and gas welding, such as TIG (tungsten inert gas) welding, and oxy-acetylene welding.

After the brazing sheet has been attached to the substrate, it is bonded to the substrate to form a wear-resistant coating. Bonding is often accomplished by metallurgically bonding ("fusing") the sheet to the substrate. Additionally, where the braze sheet is a braze preform, bonding may comprise applying an adhesive, such as an epoxy, glue, or silicone adhesive, to the substrate, preform, or both, and then applying the preform to the substrate such that the interposed layer of adhesive bonds the preform to the substrate. Use of adhesive to bond the preform is limited to applications in which the coated component will not reach a service temperature that would degrade the adhesive bond.

The fusing of the wear-resistant coating to the substrate is typically carried out in connection with a heat treatment cycle during new part manufacture or part repair or maintenance. In the latter case, fusing of the wear-resistant coating can be executed simultaneously with other brazing processes, such as braze repair of substrate cracks.

Generally, the fusing step is carried out by brazing, wherein the preform is heated to a suitable brazing temperature such that the braze alloy melts, without any substantial attendant melting of substrate or the wear-resistant particles. The brazing temperature is largely dependent upon the type of braze alloy used, but is typically in a range of about 525°C to about 1650°C. In the case of nickel-base braze alloys, braze temperatures are typically in the range of about 800°C to about 1260°C. Because the braze alloy generally has a lower melting point than that of the wear-resistant particles, the braze alloy preferentially melts during fusing leaving the particles substantially intact, although minor reaction and dissolution of the wear powder and substrate may occur. Alternatively, metallurgically bonding a braze preform to the substrate may be accomplished by welding or soldering the preform to the substrate, using any suitable materials and processes known in the art.

In the case of multiple green tapes, generally a green tape containing the braze alloy is stacked onto on a green tape containing the wear-resistant material, and the stacked tapes are placed on the substrate. Brazing is then carried out by heating the substrate, whereby the molten braze alloy infiltrates the wear-resistant material through capillary action and gravity, thereby bonding the wear resistant material to the substrate. By incorporating multiple green tapes in such a fashion, in-plane shrinkage of the wear coating is minimized as compared to a single green tape, thereby effectively preventing cracking of the wear coating and delamination of the wear coating from the substrate.

In one embodiment, brazing is carried out in a furnace having a controlled environment, such as a vacuum or an inert atmosphere. Fusing in a controlled environment advantageously prevents oxidation of the braze alloy and underlying materials including the substrate during heating, and allows precise control of part temperature and temperature uniformity. In the case of a vacuum furnace, the vacuum is typically in a range of about 10⁻¹ Torr to about 10⁻⁸ Torr achieved by evacuating ambient air from the vacuum chamber of the furnace. In one particular embodiment, brazing is carried out at a pressure of about 5 X 10⁻⁴ Torr. In the case of large substrates that are difficult to place in a furnace, or in-situ repairs on the engine, a torch or other localized heating means is typically used to effect brazing. Exemplary heating means include gas welding torches (e.g., oxy-acetylene, oxy-hydrogen, air-acetylene, and air-hydrogen), RF (radio frequency) welding, TIG (tungsten inert gas) welding, electron-beam welding, resistance welding, and use of IR (infra-red) lamps. In connection with such heating means, a flux or inert cover gas may be implemented, particularly for braze compositions that are free of boron.

Following heating so as to fuse the brazing sheet to the substrate, the braze alloy is permitted to cool, forming a metallurgical bond to the underlying material and mechanically retaining the wear-resistant particles within the solidified braze alloy forming a matrix phase. In some cases, during brazing and in subsequent elevated temperature exposures, the melting point suppressants are diffused out of the braze alloy such that the melting point of the final matrix phase is higher than the initial melting point, thereby yielding enhanced high temperature capability as required by the operating parameters of the turbine engine.

In the final structure, the braze alloy generally forms a film that is a continuous matrix phase. As used herein, "continuous" matrix phase denotes an uninterrupted film along the treated region of the substrate, between particles of the particulate phase. The thickness of the wear coating is typically chosen to ensure adequate protection of the treated substrate. By way of example, the thickness of braze alloy is typically less than about 100 mils, desirably less than 500 mils.

Following heating, a diffusion coating step is generally effected to aluminide the substrate. Generally, aluminiding is carried out to improve the oxidation and corrosion resistance of the treated component, to improve durability and longevity of the component. Diffusion coating is typically carried out by the known pack cementation process, or by a vapor phase technique. In this regard, typically the area of the substrate treated with the wear coating is does not need to be aluminided, and this portion of the aluminide layer may be removed, such as by subsequent dimensional grinding. However, according to an aspect of invention, the wear coating is adapted to withstand the aluminiding treatment, particularly, withstand the elevated temperature and aggressive chemistry of the aluminiding process. The braze alloy compositions 2, 5, and 12 listed above have been shown to withstand such processing.

In one particular variation of an embodiment of the invention, the brazing sheet is first deposited on the substrate, followed by diffusion coating. The fusing of the brazing sheet to form the wear coating is advantageously carried out contemporaneously with the diffusion coating, since the diffusion coating is deposited at an elevated temperature and will effect brazing of the wear-resistant particles to the substrate.

### Examples

The following examples are merely illustrative, and should not be construed to be any sort of limitation on the scope of the claimed invention. All constituents are provided in weight percent unless otherwise indicated.

### Example 1

A slurry was mixed which contained 50g Praxair CrC-107 (Cr₃C₂), 50g nickel-based braze alloy (19 Cr, 10 Si, balance Ni), 10g PEO solution and 10g DI water and tape cast to produce a 0.050" thick green tape. The green tape was applied to a Hast-X substrate using Nicrobraze 4B binder. This sample was then brazed for 20 min at 2215 °F which fused the tape to the underlying substrate. Metallography indicated that there was insufficient braze to completely densify the coating

### Example 2

A slurry was mixed which contained 50g Praxair CrC-107 (Cr3C2), 5g PEO solution and 5g DI water and tape cast to produce a 0.050" thick green CrC tape. This green CrC tape was combined with a commercial 0.010" Amdry100 braze tape to form a green bilayer tape. This green bilayer tape was then applied to a Hast-X substrate using Nicrobraze 4B binder such that the stacking sequence was Hast-X substrate - green CrC tape - GE81 tape. This sample was then brazed for 20 min at 2215 °F, which fused the tape to the underlying substrate. Metallography indicated that there was sufficient braze to infiltrate the CrC tape and completely densify the coating.

### Example 3

The tape from example 1 was sintered for 20 min at 2215 °F to produce a preform. The resulting sintered preform was spot welded to a Hast-X substrate and brazed for 20 min at 2215 °F. Metallography indicated that there was sufficient braze to completely densify the coating.

According to embodiments of the present invention, an improved wear coating and process for coating are provided. The wear coating is easily deposited in difficult to access regions of the substrate, without the need for masking. In the context of repairing and maintaining turbine engines, the coating may deposited on-site with minimal equipment.

For the sake of good order, various aspects of the invention are set out in the following clauses:-
1. A method for coating a substrate, comprising the steps of:
   providing a substrate;
   attaching a preform to the substrate, the preform comprising braze alloy and wear-resistant particles; and
   bonding the preform to the substrate to form a wear-resistant coating.
2. The method of clause 1, wherein bonding comprises metallurgically bonding the preform to the substrate.
3. The method of clause 2, wherein metallurgically bonding comprises at least one of brazing, welding, and soldering.
4. The method of clause 3, wherein brazing comprises heating the preform to melt the braze alloy of the preform.
5. The method of clause 1, wherein bonding comprises applying an adhesive to at least one of the substrate and the preform.
6. The method of clause 1, wherein the preform is free of binder.
7. The method of clause 1, wherein the wear-resistant particles comprise a ceramic material.
8. The method of clause 7, wherein the ceramic material comprises at least one of a carbide and an oxide.
9. The method of clause 8, wherein the carbide comprises at least one of chromium carbide and tungsten carbide.
10. The method of clause 8, wherein the oxide comprises at least one of aluminum oxide and yttrium oxide.
11. The method of clause 1, wherein the wear-resistant particles comprise diamond.
12. The method of clause 1, wherein the substrate comprises a component of a turbine assembly.
13. The method of clause 12, wherein said component is at least one of a nozzle (10), shroud (14), shroud hanger (16), pressure balance seal, low pressure turbine blade (22), high pressure turbine blade (22), and combustor component.
14. The method of clause 13, wherein said turbine blade (22) comprises a tip shroud (20).
15. The method of clause 14, wherein attaching further comprises attaching said preform to said tip shroud (20).
16. The method of clause 15, wherein attaching further comprises attaching said preform to an interlock notch (23) of said tip shroud (20).
17. The method of clause 1, wherein the wear-resistant particles comprise an alloy.
18. The method of clause 17, wherein the alloy comprises a cobalt-base alloy.
19. A method for coating a turbine assembly component, comprising:
   providing a substrate, wherein the substrate is at least one component of a turbine assembly;
   attaching a preform to the substrate, the preform comprising braze alloy and wear-resistant particles, the braze alloy comprising at least one of a nickel-base and a cobalt-base alloy, and the wear-resistant particles comprising a material from the group consisting of a ceramic material and diamond; and
   fusing the preform to said substrate.
20. A method for coating a turbine engine component, comprising the steps of:
   providing a substrate, the substrate being selected from the group consisting of a nozzle (10), shroud (14), shroud hanger (16), pressure balance seal, turbine blade (22), and combustor component;
   applying braze alloy and wear-resistant particles on the substrate, the braze alloy comprising a nickel-base or a cobalt-base alloy, wherein nickel or cobalt is the single greatest element of the alloy by weight, and the wear-resistant particles comprising a material from the group consisting of (i) Cr₂₃C₆, Cr₇C₃, Cr₃C₂, and combinations thereof, and (ii) a cobalt alloy, wherein said cobalt alloy forms a lubricious oxide film; and
   heating the braze alloy to bond the wear-resistant particles to the substrate to form a wear coating on the substrate.
21. A method for coating a turbine engine component, comprising the steps of:
   providing a substrate, the substrate being selected from the group consisting of a nozzle (10), shroud (14), shroud hanger (16), pressure balance seal, turbine blade (22), and combustor component;
   attaching a preform to the substrate, the preform containing braze alloy and wear-resistant particles, the braze alloy comprising a nickel-base or a cobalt-base alloy, wherein nickel or cobalt is the single greatest element of the alloy by weight, and the wear-resistant particles comprising a material from the group consisting of (i) Cr₂₃C₆, Cr₇C₃, Cr₃C₂, and combinations thereof, and (ii) a cobalt alloy, wherein said cobalt alloy forms a lubricious oxide film; and
   fusing said preform to said substrate.
22. A method for coating a turbine assembly component, comprising:
   providing a low pressure turbine blade (22), said blade (22) comprising a tip shroud (20) having two correspondingly opposite Z-shaped interlock notches (23);
   attaching a preform to said interlock notches (23) of said tip shroud (20), said preform comprising braze alloy and wear-resistant particles, the braze alloy comprising at least one of a nickel-base and a cobalt-base alloy, and the wear-resistant particles comprising material selected from the group consisting of (1) about 28.5 wt% molybdenum, about 17.5 wt% chromium, about 3.4 wt% silicon, balance cobalt, (2) about 22.0 wt% nickel, about 22 wt% Cr, about 14.5 wt% tungsten, about 0.35 wt% silicon, about 2.3 wt% boron, balance cobalt, (3) about 10 wt% nickel, about 20 wt% Cr, about 15 wt% tungsten, balance cobalt, (4) about 22 wt% nickel, about 22 wt% Cr, about 15.5 wt% tungsten, balance cobalt, and (5) about 5 wt% nickel, about 28 wt% Cr, about 19.5 wt% tungsten, balance cobalt; and
   fusing said preform to said blade (22).

## Claims

1. A method for coating a substrate, comprising the steps of:
providing a substrate;
attaching a preform to the substrate, the preform comprising braze alloy and wear-resistant particles; and
bonding the preform to the substrate to form a wear-resistant coating.

2. The method of claim 1, wherein bonding comprises metallurgically bonding the preform to the substrate.

3. The method of claim 2, wherein metallurgically bonding comprises at least one of brazing, welding, and soldering.

4. The method of claim 3, wherein brazing comprises heating the preform to melt the braze alloy of the preform.

5. The method of claim 1, wherein bonding comprises applying an adhesive to at least one of the substrate and the preform.

6. The method of claim 1, wherein the preform is free of binder.

7. A method for coating a turbine assembly component, comprising:
providing a substrate, wherein the substrate is at least one component of a turbine assembly;
attaching a preform to the substrate, the preform comprising braze alloy and wear-resistant particles, the braze alloy comprising at least one of a nickel-base and a cobalt-base alloy, and the wear-resistant particles comprising a material from the group consisting of a ceramic material and diamond; and
fusing the preform to said substrate.

8. A method for coating a turbine engine component, comprising the steps of:
providing a substrate, the substrate being selected from the group consisting of a nozzle (10), shroud (14), shroud hanger (16), pressure balance seal, turbine blade (22), and combustor component;
applying braze alloy and wear-resistant particles on the substrate, the braze alloy comprising a nickel-base or a cobalt-base alloy, wherein nickel or cobalt is the single greatest element of the alloy by weight, and the wear-resistant particles comprising a material from the group consisting of (i) Cr₂₃C₆, Cr₇C₃, Cr₃C₂, and combinations thereof, and (ii) a cobalt alloy, wherein said cobalt alloy forms a lubricious oxide film; and
heating the braze alloy to bond the wear-resistant particles to the substrate to form a wear coating on the substrate.

9. A method for coating a turbine engine component, comprising the steps of:
providing a substrate, the substrate being selected from the group consisting of a nozzle (10), shroud (14), shroud hanger (16), pressure balance seal, turbine blade (22), and combustor component;
attaching a preform to the substrate, the preform containing braze alloy and wear-resistant particles, the braze alloy comprising a nickel-base or a cobalt-base alloy, wherein nickel or cobalt is the single greatest element of the alloy by weight, and the wear-resistant particles comprising a material from the group consisting of (i) Cr₂₃C₆, Cr₇C₃, Cr₃C₂, and combinations thereof, and (ii) a cobalt alloy, wherein said cobalt alloy forms a lubricious oxide film; and
fusing said preform to said substrate.

10. A method for coating a turbine assembly component, comprising:
providing a low pressure turbine blade (22), said blade (22) comprising a tip shroud (20) having two correspondingly opposite Z-shaped interlock notches (23);
attaching a preform to said interlock notches (23) of said tip shroud (20), said preform comprising braze alloy and wear-resistant particles, the braze alloy comprising at least one of a nickel-base and a cobalt-base alloy, and the wear-resistant particles comprising material selected from the group consisting of (1) about 28.5 wt% molybdenum, about 17.5 wt% chromium, about 3.4 wt% silicon, balance cobalt, (2) about 22.0 wt% nickel, about 22 wt% Cr, about 14.5 wt% tungsten, about 0.35 wt% silicon, about 2.3 wt% boron, balance cobalt, (3) about 10 wt% nickel, about 20 wt% Cr, about 15 wt% tungsten, balance cobalt, (4) about 22 wt% nickel, about 22 wt% Cr, about 15.5 wt% tungsten, balance cobalt, and (5) about 5 wt% nickel, about 28 wt% Cr, about 19.5 wt% tungsten, balance cobalt; and
fusing said preform to said blade (22).
